# EUROPÄISCHE PATENTSCHRIFT

(11) **EP 2 202 460 B1**
(45) Veröffentlichungstag und Bekanntmachung des Hinweises auf die Patenterteilung: **20.02.2019**
(21) Anmeldenummer: 09180350.2
(22) Anmeldetag: 22.12.2009
(51) Int. Cl.: F23D 14/22, F23D 14/56, F23C 5/14, F23C 6/04, F23D 14/32, C03B 5/235

(54) **Flachflammenbrenner und Verfahren zum Betreiben eines Flachflammenbrenners**
Flat flame burner and method for operating same
Brûleur à flamme en nappe et procédé de fonctionnement d'un brûleur à flamme en nappe

(30) Priorität: 24.12.2008 DE 102008063101
(43) Veröffentlichungstag der Anmeldung: 30.06.2010
(73) Patentinhaber: Messer Austria GmbH, 2352 Gumpoldskirchen (AT)
(72) Erfinder: Potesser, Michael, 1020, Wien (AT); Holleis, Burkhardt, 2522, Oberwaltersdorf (AT)
(74) Vertreter: Münzel, Joachim R.

(56) Entgegenhaltungen:
- EP-A2- 0 069 245
- DE-U1- 29 512 231
- US-A- 5 292 246
- US-A1- 2004 157 178

## Beschreibung

Die Erfindung betrifft einen Herd- oder Wannenofen mit einem Brenner sowie ein Verfahren zum Betreiben von einem Herd- oder Wannenofen mit einem Brenner nach den Ansprüche 1 und 7.

Steigende Energiekosten und die Notwendigkeit, die Emissionen an NOₓ und CO2 in Zukunft weiter zu verringern und gleichzeitig die Produktion zu steigern, sind in der Glas- und Keramik- und metallurgischen Industrie die treibende Kraft zur Umrüstung bzw. Nachrüstung der bestehenden Brenneranlagen von Brennstoff-Luft- auf Brennstoff-Sauerstoff Verfahren. Die Umrüstung betrifft alle gängigen Herdöfen bzw. Wannentypen. Durch die Sauerstoffanreicherung bzw. der Verwendung von reinem Sauerstoff als Oxidationsmittel wird die Flammentemperatur erhöht. Durch die damit verbundene Verstärkung der Strahlung der strahlenden Komponenten des Brenngases wird der Wärmeübergang auf das Produkt erhöht. Zugleich wird die Menge an zu erwärmendem Gas im Vergleich zur Verbrennung mit Luft durch das Fehlen der Luftstickstoffanteile gesenkt.

Um beispielsweise in einem Herdofen optimale Strahlungsverhältnisse zu erzielen, kommen häufig Flachflammenbrenner zum Einsatz. Üblicherweise werden bei Flachflammenbrennern die Brenngase mit Drall aus der Mündungsöffnung des Brenners ausgestoßen und über einen sich meist trichterförmig erweiternden Brennerkanal im Brennerstein in den Brennraum eingeleitet. Ein solcher Brennertyp wird beispielsweise in der DE 23 08 470 C3 beschrieben. Durch diese spezielle Ausgestaltung wird die Flamme aufgeweitet. Gleichzeitig wird jedoch das Feuerfestmaterial des Brennersteines einer hohen Belastung ausgesetzt; die divergierenden Brenngasströme verhindern zudem die Ausbildung einer flammenlosen Verbrennung im Brennraum.

Die EP 0 762 050 B1 beschreibt einen Flachflammenbrenner für gestufte Verbrennung, bei dem eine im Querschnitt ovale, sich zum Brennraum hin verbreiternde Brennerdüse in einer gleichfalls ovalen Sauerstoffdüse eingefasst ist. Die Düse mündet in die sich zum Brennraum hin konisch erweiternde Öffnung eines Brennersteins ein. Unterhalb dieser Konstruktion ist eine weitere Düse für Sekundärsauerstoff angeordnet, mittels der die Zuführung des Oxidationsmittels bis zur Herstellung stöchimetrischer Verhältnisse bewirkt wird.

Aus der US 5 299 929 B1 ist ein Flachflamenbrenner bekannt, bei dem eine Brennstoffdüse sandwichartig zwischen zwei Sauerstoffdüsen aufgenommen ist. Um eine möglichst breite Flamme hervorzubringen, sind sowohl die Brennstoffdüse als auch die Sauerstoffdüsen zur Brennermündung hin fächerförmig aufgespreizt.

Aus der US 2004/157178 ist ein Herd- oder Wannenofen nach dem Oberbegriff des Anspruchs 1 bekannt.

Die bekannten Brenner haben sich bewährt, sind jedoch noch hinsichtlich ihrer Wirtschaftlichkeit und hinsichtlich der von ihnen ausgehenden NOₓ Emissionen verbesserungsbedürftig. Insbesondere sind sie nicht für eine flammenlose Verbrennung geeignet, die zu besonders günstigen Werten der NOₓ-Emission beiträgt.

Der Erfindung liegt somit die Aufgabe zu Grunde, einen Brenner mit niedriger NOx - Emission zu schaffen, der sehr wirtschaftlich arbeitet und insbesondere eine fllammenlosen Verbrennung des Brennstoffs im Brennraum ermöglicht.

Gelöst ist diese Aufgabe bei einem Brenner der eingangs genannten Art und Zweckbestimmung gemäß dem Anspruch 1.

Im Unterschied zu den Brennern nach dem Stande der Technik sind also die Brennerzuführungen und die Oxidationsmittelzuführungen für das primäre Oxidationsmittel durch den Brennerstein hindurch strömungstechnisch voneinander getrennt bis zum Brennraum geführt. Erst vor den Austrittsöffnungen und beabstandet vom Brennerstein findet die Verbrennung statt. Die Verbrennungsvorgänge an den verschiedenen Austrittsöffnungen beeinflussen sich gegenseitig und führen insgesamt zur Ausprägung einer breiten, aufgefächerten Gesamtflamme. Die Brenngase dringen parallel zueinander in den Brennraum ein und ermöglichen auf diese Weise auch die Herstellung nahezu laminarer Strömungsverhältnisse, die eine flammenlose Verbrennung im Brennraum erlauben. Dadurch wird gegenüber den bekannten Anordnungen mit sich trichterförmig aufweitenden oder divergierend angeordneten Zuführungskanälen ein wesentlicher Vorteil erzielt, da eine flammenlose Verbrennung zu vergleichsweise niedrigen NOₓ-Emissionen führt. Die Verbrennungsgase kommen zudem nicht unmittelbar mit dem Brennerstein in Berührung, wodurch dessen Festfeuermaterial geschont wird. Zudem erhöhen die voneinander unabhängig ansteuerbaren Zuführungen des Brennstoffs bzw. des primären Oxidationsmittels die Flexibilität des Brenners hinsichtlich der jeweiligen Anforderungen. Impulsströme und Flammengeometrie können in einem weiten Bereich variiert und den räumlichen Gegebenheiten oder den Anforderungen an die metallurgische Aufgabe angepasst werden, ohne dass der Brenneraufbau dazu geändert werden müsste.

Eine vorteilhafte Weiterbildung der Erfindung sieht vor, dass die Austrittsöffnungen Gruppen der Oxidationsmittelzuführungen vertikal voneinander beabstandete Reihen bilden, zwischen denen eine Brennstoffzuführung bzw. eine Reihe von Brennstoffzuführungen ausmündet. Zwischen jeweils zwei Reihen von Oxidationsmittelzuführungen ist also eine Brennstoffzuführung oder eine Reihe von Brennstoffzuführungen vorgesehen.

Eine im Aufbau besonders einfache und bevorzugte Ausgestaltung der Erfindung sieht vor, dass die Austrittsöffnungen mehrerer Brennstoffzuführungen und die Austrittsöffnungen der wenigstens zwei Gruppen der Oxidationsmittelzuführungen auf Geraden angeordnet sind, die zueinander parallel verlaufen. Jedoch ist es im Rahmen der Erfindung auch vorstellbar, dass die Reihen der Austrittsöffnungen, je nach den Anforderungen der jeweiligen Ofenanlage, anders als entlang einer Geraden angeordnet sind.

Verlaufen die Austrittsöffnungen der Oxidationsmittelzuführungen bzw. der Brennstoffzuführungen entlang paralleler Geraden, sind bevorzugt die Austrittsöffnungen der Brennstoffzuführungen gegenüber den Austrittsöffnungen der Oxidationsmittelzuführungen versetzt zueinander angeordnet.

Der erfindungsgemäße Brenner umfasst vorzugsweise jeweils ein bis zehn Brennstoffzuführungen und ebenso ein bis zehn Oxidationsmittelzuführungen. Die Zahl der Oxidationsmittelzuführungen sollte dabei jedoch in der Regel größer sein als die der Brennstoffzuführungen.

Eine abermals vorteilhafte Ausgestaltung der Erfindung sieht vor, dass seitlich und/oder oberhalb der Brennstoffzuführungen und/oder der Oxidationsmittelzuführungen Zuleitungen für sekundäres Oxidationsmittel vorgesehen sind. Die Zuleitungen für sekundäres Oxidationsmittel sind insbesondere für die Durchführung einer gestuften Verbrennung von Vorteil, indem der Brennstoff und das durch die Oxidationsmittelzuführungen des Brennerkopfs zugeführte primäre Oxidationsmittel in einem unterstöchiometrischen Verhältnis eingetragen und volle Stöchiometrie erst durch Zuführung des sekundären Oxidationsmittel erreicht wird.

In einigen Anwendungsfällen erweist es sich als vorteilhaft, wenn die Brennstoffzuführungen und oder die Oxidationsmittelzuführungen und/oder die Zuleitungen für sekundäres Oxidationsmittel mit einer Kühleinrichtung ausgerüstet sind. Beispielsweise handelt es sich bei der Kühleinrichtung um eine Wasser- oder Dampfkühlung.

Bevorzugt sind die Brennstoffzuführungen zumindest teilweise innerhalb von Oxidationsmittelzuführungen aufgenommen.

Die Aufgabe der Erfindung wird auch durch ein Verfahren zum Betreiben eines der beschriebenen Brenner nach dem Anspruch 7 gelöst.

In einer vorteilhaften Weiterbildung des erfindungsgemäßen Verfahrens wird Brennstoff und primäres Oxidationsmittel im unterstöchiometrischen Verhältnis zueinander eingetragen und über von den primären Oxidationsmittelzuführungen bzw. den Brennstoffzuführungen beabstandete Zuleitungen sekundäres Oxidationsmittel bis zum Erreichen stöchiometrischer Verhältnisse eingedüst, wodurch eine gestufte Verbrennung erzielt wird. Als Zuleitungen für sekundäres Oxidationsmittel kommen beispielsweise übliche Oxidationsmittellanzen zum Einsatz. Durch eine geeignete Wahl der des Impulsstromes zugeführten sekundären Oxidationsmittels und der Lanzengeometrie kann die Flamme den jeweiligen räumlichen Gegebenheiten des Brennraums angepasst werden.

Eine weitere bevorzugte Ausgestaltung der Erfindung sieht vor, dass die Flammengeometrie und/oder die Hauptflammenrichtung durch Variation der Impulsströme des durch die sekundären Oxidationsmittelkanäle zugeführten sekundären Oxidationsmittels variiert werden. Durch die pulsweise Zuführung von sekundärem Oxidationsmittel kann auf diese Weise eine wippende, schwenkende oder drehende Flammenführung erreicht werden.

Vorteilhafterweise kommt als Oxidationsmittel Sauerstoff mit einer Reinheit von über 95 Vol.-%, bevorzugt über 99 Vol.-% zum Einsatz. Je höher der Sauerstoffgehalt desto niedriger ist das im Brennraum zu erhitzende Gasvolumen. Als Brennstoff können alle gasförmigen, flüssigen oder rieselfähig - festen Brennstoffe zum Einsatz kommen. Die mit dem erfindungsgemäßen Brenner durchgeführte gestufte, flammenlose Brennstoff-Sauerstoffverbrennung ist eine besonders wirtschaftliche und emissionsarme Art der Verbrennung.

Anhand der Zeichnung soll ein Ausführungsbeispiel der Erfindung näher erläutert werden. In schematischer Ansicht zeigen:
Fig. 1: Einen erfindungsgemäßen Brenner in einer Frontansicht und
Fig. 2: Den Brenner aus Fig. 1 in einem Längsschnitt entlang der Linie II - II in Fig. 1

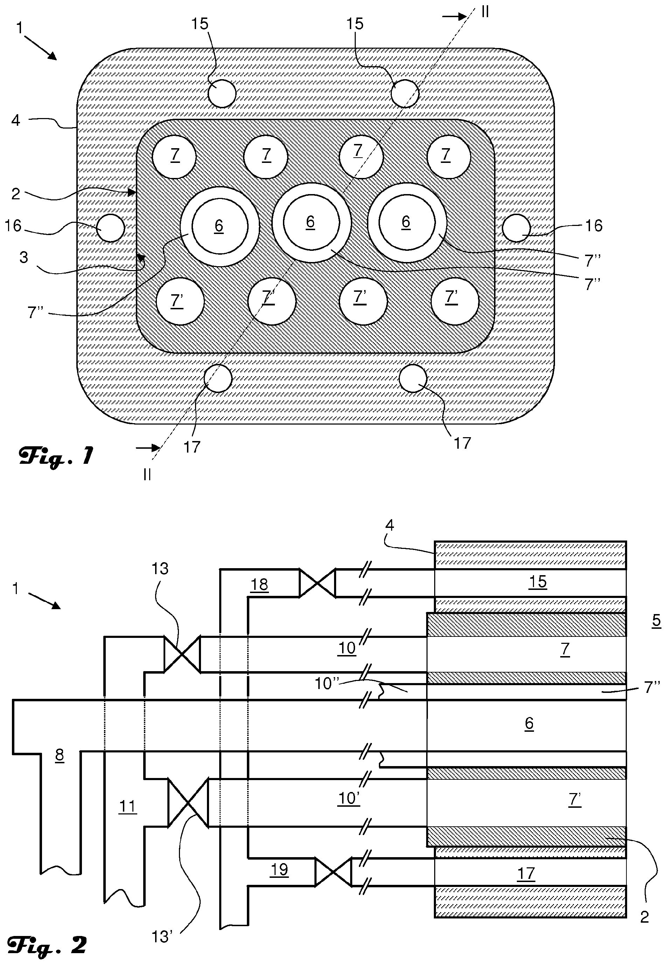

Fig 1 zeigt den Mündungsbereich eines erfindungsgemäßen Brenners 1 aus der Perspektive des Brennraums. Der Brenner 1 umfasst einen Brennerkopf 2, der in einer Öffnung 3 eines aus einem Feuerfestmaterial bestehenden Brennersteins 4 aufgenommen ist. Der Brennerkopf 2 besteht bevorzugt aus Metall, beispielsweise Edelstahl, und ist im Außenumfang zylinderförmig ausgebildet, entsprechend der gleichfalls zylinderförmigen Ausgestaltung der Öffnung 3 des Brennersteins 4. Bei dem Brennerkopf 2 handelt es sich beispielsweise um einen massiven Metallkörper, in dem parallel zueinander Durchführungen 6; 7, 7', 7" für Brennstoff und primäres Oxidationsmittel gebohrt sind. Innerhalb der Durchführungen können auch Düsen vorgesehen sein; so sind im Ausführungsbeispiel die Brennstoffdurchführung 6 innerhalb jeweils einer zentralen Durchführung 7" für primäres Oxidationsmittel angeordnet. Generell können alle Durchführungen für Brennstoff oder Oxidationsmittel auch als Düsen ausgebildet sein. Bei den Durchführungen 6 für Brennstoff handelt es sich um im Ausführungsbeispiel drei gleichartige, zumindest innerhalb des Brennerkopfes 2 strömungstechnisch voneinander getrennte Durchführungen, die auf ihrem vom Brennraum 5 abgewandten Ende in eine gemeinsame Brennstoffzuleitung 8 einmünden. In den Zeichnungen nicht gezeigt, gleichwohl vorhanden ist im Brennerkopf 2 montierte Zündvorrichtung.

Die oberen bzw. unteren bzw. zentralen Durchführungen 7, 7', 7" für das primäre Oxidationsmittel sind auf ihrer vom Brennraum 5 abgewandten Seite mit oberen bzw. unteren bzw. zentralen Zuleitungen 10,10',10" für das primäre Oxidationsmittel verbunden. Die oberen und unteren Zuleitungen 10,10' sowie - im Bild aus Gründen der Übersichtlichkeit nicht gezeigt - die Zuleitungen 10" für die zentralen Durchführungen 7" münden in eine gemeinsame Oxidationsmittelhauptleitung 11, die wiederum mit einer hier nicht gezeigten Quelle für das primäre Oxidationsmittel, beispielsweise mit einem Sauerstofftank, verbunden sind. In der mit den oberen Durchführungen 7 strömungsverbundenen oberen Zuleitung 10 ist ein Ventil 13 angeordnet, mittels der der Zustrom von primärem Oxidationsmittel durch die Zuleitung 10 bzw. die Durchführung 7 gesteuert werden kann. Ebenso sind die mit den unteren Durchführungen 7' strömungsverbundene Zuleitungen 10', jeweils mit einem Ventil 13' ausgerüstet, mittels dessen der Zustrom von primärem Oxidationsmittel durch die Durchführung 7' gesteuert werden kann. Gleiches gilt auch für die zentralen Zuleitungen 10". Die Durchmesser und Querschnittsformen der Durchführungen 6, 7, 7', 7" bzw. der Zuleitungen 8, 10, 10', 10" hängen von den jeweiligen Erfordernissen ab und müssen keineswegs gleich sein.

Im Ausführungsbeispiel außerhalb des Brennerkopf 2 sind Lanzen 15, 16, 17 für sekundäres Oxidationsmittel oberhalb (15) seitlich (16) und unterhalb (17) des Brennerkopfes 2 in entsprechenden Durchführungen des Brennersteins 4 eingelassen. In anderen Ausgestaltungen der Erfindung können entsprechende Zuführungen für sekundäres Oxidationsmittel jedoch auch in den Brennerkopf 2 integriert sein. Die Zuführung von sekundärem Oxidationsmittel dient insbesondere der Herstellung einer gestuften Verbrennung. Bei dieser wird primäres Oxidationsmittel nur in einem unterstöchiometrischen Verhältnis zum Brennstoff eingetragen. Volle Stöchiometrie wird erst über Zuführung des sekundären Oxidationsmittels durch die Lanzen 15, 16, 17.

Die Lanzen 15, 16, 17 sind über entsprechende Zuführungen 18, 19 an eine hier nicht gezeigte Quelle für sekundäres Oxidationsmittel angeschlossen. Bei der Quelle für sekundäres Oxidationsmittel kann es sich um die gleiche Quelle wie die für das primäre Oxidationsmittel handeln; es ist im Rahmen der Erfindung jedoch auch möglich, unterschiedliche Medien für das primäre und das sekundäre Oxidationsmittel einzusetzen. In den Zuleitungen 18, 19 für die Lanzen 15, 16, 17 sind Ventile angeordnet, mittels denen der Zustrom an sekundärem Oxidationsmittel gesteuert werden kann.

Beim Betrieb des Brenners 1 wird ein Brennstoff, beispielsweise Erdgas, Öl oder Kohlestaub, über die Brennstoffdurchführungen 6 in den Brennraum 5 eingeleitet.

Zugleich wird primäres Oxidationsmittel über die oberen und unteren Durchführungen 7, 7' eingeleitet und das Gemisch gezündet. Als primäres Oxidationsmittel kommt insbesondere ein sauerstoffreiches Gas zum Einsatz, bevorzugt reiner Sauerstoff mit einer Reinheit von über 95 Vol-%, besonders bevorzugt mit einer Reinheit von über 99 Vol.-%, wir er beispielsweise in kryogenen Luftzerlegungsanlagen erzeugt wird. Die Strömungsgeschwindigkeiten des Brennstoffs und des primären Oxidationsmittel werden so gewählt, dass sich eine flammenlose Verbrennung im Brennraum 5 ausbildet. Eine gestufte Verbrennung wird durch Zuführung von sekundärem Oxidationsmittel über die Lanzen 15, 16, 17 erreicht. Je höher die Geschwindigkeit des eingetragenen sekundären Oxidationsmittels ist, desto tiefer kann der Verbrennungsvorgang in den Brennraum hineingetragen werden. Werden in einander gegenüberliegenden Lanzen unterschiedliche Volumenströme an sekundärem Oxidationsmittel eingetragen, kann die Flamme bzw. die Hauptstrahlungsrichtung der Verbrennung vertikal oder horizontal verschwenkt werden. Durch aufeinander abgestimmte pulsförmige Einträge an sekundärem Oxidationsmittel durch die Lanzen 15, 16, 17 kann die Flamme bzw. die Hauptstrahlungsrichtung auch in (vertikal) wippende, (horizontal) schwenkende oder in kreisförmige Bewegung gebracht werden. Je nach Anforderung kann das Verhältnis aus primärem und sekundärem Oxidationsmittel variiert und die Luftzahl verändert werden. Eine solche Änderung kann im Übrigen auch Gegenstand einer entsprechenden Regelung in Abhängigkeit von geeigneten, laufend ermittelten Messparametern sein, worauf jedoch hier nicht weiter eingegangen wird.

Der erfindungsgemäße Brenner zeichnet sich gegenüber Flachflammenbrennern nach dem Stande der Technik durch einen geringen Verschleiß an Feuerfestmaterial des Brennersteins aus. Er ist sehr flexibel einsetzbar und ermöglicht bei hohem Durchsatz an Brennstoff und geringen spezifischen Kosten eine flammenlose und damit besonders NOₓ - arme Verbrennung.

### Bezugszeichenliste

- 1.: Brenner
- 2.: Brennerkopf
- 3.: Öffnung
- 4.: Brennerstein
- 5.: Brennraum
- 6.: Brennstoffdurchführung
- 7.: Obere Durchführung (für primäres Oxidationsmittel)
- 7'.: Untere Durchführung (für primäres Oxidationsmittel)
- 7".: Zentrale Durchführung (für primäres Oxidationsmittel)
- 8.: Brennstoffzuleitung
- 9.: -
- 10.: Obere Zuleitung (für primäres Oxidationsmittel)
- 10'.: Untere Zuleitung (für primäres Oxidationsmittel)
- 10": Zentrale Zuleitung (für primäres Oxidationsmittel)
- 11.: Oxidationsmittelhauptleitung
- 12.: -
- 13.: Ventil
- 13'.: Ventil
- 14.: -
- 15.: obere Lanze (für sekundäres Oxidationsmittel)
- 16.: seitliche Lanze (für sekundäres Oxidationsmittel)
- 17.: untere Lanze (für sekundäres Oxidationsmittel)
- 18.: Zuführung
- 19.: Zuführung

## Patentansprüche

1. Herd- oder Wannenofen mit einem Brenner, der mit wenigstens einer an eine Brennstoffleitung (8) angeschlossenen, sich durch einen Brennerstein (4) hindurch erstreckenden und an einer Austrittsöffnung in einen Brennraum (5) ausmündenden Brennstoffzuführung (6) und mit wenigstens einer an eine Oxidationsmittelleitung (10, 10') angeschlossenen, sich durch den Brennerstein (4) hindurcherstreckenden und an einer Austrittsöffnung in den Brennraum (5) ausmündenden Oxidationsmittelzuführung (7, 7') für primäres Oxidationsmittel,
wobei die wenigstens eine Brennstoffzuführung (6) und die wenigstens eine Oxidationsmittelzuführung (7,7') für primäres Oxidationsmittel sich parallel zueinander durch den Brennerstein (4) hindurch erstrecken und beabstandet voneinander in den Brennraum (5) ausmünden,
**dadurch gekennzeichnet,**
**dass** zwei oder mehr Oxidationsmittelzuführungen (7, 7', 7") für primäres Oxidationsmittel vorgesehen sind, die in zwei voneinander beabstandeten Gruppen so angeordnet sind, dass die Austrittsöffnungen der Gruppen der Oxidationsmittelzuführungen (7, 7', 7") vertikal voneinander beabstandete Reihen bilden, zwischen denen eine Reihe von Brennstoffzuführungen (6) ausmündet, und seitlich und/oder oberhalb der Brennstoffzuführungen (6) und/oder der Oxidationsmittelzuführungen Zuleitungen (15, 16, 17) für ein sekundäres Oxidationsmittel vorgesehen sind.

2. Ofen nach Anspruch 1, **dadurch gekennzeichnet, dass** die Austrittsöffnungen der Brennstoffzuführungen (6) und der Oxidationsmittelzuführungen (7, 7', 7") in parallel zueinander verlaufenden Reihen angeordnet sind.

3. Ofen nach Anspruch 2, **dadurch gekennzeichnet, dass** die Austrittsöffnungen der parallel verlaufenden Reihen der Brennstoffzuführungen (6) bzw. der Oxidationsmittelzuführungen (7, 7', 7") versetzt zueinander angeordnet sind.

4. Ofen nach einem der vorhergehenden Ansprüche, **dadurch gekennzeichnet, dass** jeweils ein bis zehn Brennstoffzuführungen (6) und ein bis zehn Oxidationsmittelzuführungen (7, 7',7") vorgesehen sind.

5. Ofen nach einem der vorhergehenden Ansprüche, **dadurch gekennzeichnet, dass** die Brennstoffzuführungen (6) zumindest teilweise innerhalb von Oxidationsmittelzuführungen (7") aufgenommen sind.

6. Ofen nach einem der vorhergehenden Ansprüche, **dadurch gekennzeichnet, dass** die Brennstoffzuführungen (6) und/oder die Oxidationsmittelzuführungen (7,7', 7") und/oder die Zuleitungen (15, 16, 17) für sekundäres Oxidationsmittel mit einer Kühleinrichtung ausgerüstet sind.

7. Verfahren zum Verbrennen eines Brennstoffs mit einem Oxidationsmittel in einem Herd- oder Wannenofen , **dadurch gekennzeichnet, dass** ein Brennstoff durch mehrere parallel zueinander angeordnete Brennstoffzuführungen (6) und ein primäres Oxidationsmittel durch mehrere, parallel zueinander und zu den Brennstoffzuführungen (6) angeordnete Oxidationsmittelzuführungen (7, 7', 7") in den Brennraum (5) derart unter Ausbildung nahezu laminarer Strömungsverhältnisse eingeleitet werden, dass nach Zündung eine flammenlose Verbrennung im Brennraum (5) erfolgt
und Brennstoff und primäres Oxidationsmittel im unterstöchiometrischen Verhältnis zueinander eingetragen werden und über von den primären Oxidationsmittelzuführungen (7, 7', 7") bzw. den Brennstoffzuführungen (6) beabstandete sekundäre Oxidationsmittelkanäle (15, 16, 17) sekundäres Oxidationsmittel bis zum Erreichen stöchiometrischer Verhältnisse eingedüst wird, wodurch eine gestufte Verbrennung erzielt wird.

8. Verfahren nach Anspruch 7, **dadurch gekennzeichnet, dass** die Flammengeometrie und/oder die Hauptflammenrichtung durch Variation der Impulsströme des durch die sekundären Oxidationsmittelkanäle (15, 16, 17) zugeführten sekundären Oxidationsmittels variiert wird.

9. Verfahren nach einem der Ansprüche 7 oder 8, **dadurch gekennzeichnet, dass** als Oxidationsmittel Sauerstoff mit einer Reinheit von über 95 Vol.-%, bevorzugt über 99 Vol.-% zum Einsatz kommt.

## Claims

1. Hearth or tank furnace comprising a burner, which with at least one fuel feed (6), which is connected to a fuel line (8), extends through a burner quarl (4) and opens out into a combustion chamber (5) at an outlet port, and with at least one oxidant feed (7, 7') for primary oxidant, which is connected to an oxidant line (10, 10'), extends through the burner quarl (4) and opens out into the combustion chamber (5) at an outlet port,
wherein the at least one fuel feed (6) and the at least one oxidant feed (7, 7') for primary oxidant extend through the burner quarl (4) parallel to one another and open out into the combustion chamber (5) at a distance from one another,
**characterized**
**in that** two or more oxidant feeds (7, 7', 7") for primary oxidant are provided and are arranged in two groups at a distance from one another such that the outlet ports of the groups of the oxidant feeds (7, 7', 7") form rows vertically at a distance from one another, between which a row of fuel feeds (6) opens out, and supply lines (15, 16, 17) for a secondary oxidant are provided laterally and/or above the fuel feeds (6) and/or the oxidant feeds.

2. Furnace according to Claim 1, **characterized in that** the outlet ports of the fuel feeds (6) and of the oxidant feeds (7, 7', 7") are arranged in rows running parallel to one another.

3. Furnace according to Claim 2, **characterized in that** the outlet ports of the parallel running rows of fuel feeds (6) and oxidant feeds (7, 7', 7") are arranged offset in relation to one another.

4. Furnace according to one of the preceding claims, **characterized in that** one to ten fuel feeds (6) and one to ten oxidant feeds (7, 7', 7") are provided in each case.

5. Furnace according to one of the preceding claims, **characterized in that** the fuel feeds (6) are at least partially accommodated within oxidation feeds (7").

6. Furnace according to one of the preceding claims, **characterized in that** the fuel feeds (6) and/or the oxidant feeds (7, 7', 7") and/or the supply lines (15, 16, 17) for secondary oxidant are equipped with a cooling device.

7. Method for burning a fuel with an oxidant in a hearth or tank furnace, **characterized in that** a fuel is introduced through a number of fuel feeds (6) arranged parallel to one another and a primary oxidant is introduced through a number of oxidant feeds (7, 7', 7") arranged parallel to one another and to the fuel feeds (6) into the combustion chamber (5), thereby forming almost laminar flow conditions, in such a way that after ignition flameless combustion takes place in the combustion chamber (5)
and fuel and primary oxidant are input in substoichiometric ratio to one another and secondary oxidant is injected by way of secondary oxidant channels (15, 16, 17), which are at a distance from the primary oxidant feeds (7, 7', 7") and the fuel feeds (6), until stoichiometric conditions are obtained, whereby staged combustion is achieved.

8. Method according to Claim 7, **characterized in that** the geometry of the flame and/or the main direction of the flame is/are varied by variation of the pulsed streams of the secondary oxidant fed through the secondary oxidant channels (15, 16, 17).

9. Method according to either of Claims 7 and 8, **characterized in that** oxygen with a purity of over 95% by volume, preferably over 99% by volume, is used as the oxidant.

## Revendications

1. Four à sole ou four à bassin avec un brûleur, qui avec au moins une arrivée de combustible (6) raccordée à au moins une conduite de combustible (8), s'étende à travers un ouvreau (4) et débouche à une ouverture de sortie dans une chambre de combustion (5) et avec au moins une arrivée d'agent d'oxydation (7, 7') pour un agent d'oxydation primaire qui est raccordée à une conduite d'agent d'oxydation (10, 10'), s'étende à travers l'ouvreau (4) et débouche à une ouverture de sortie dans la chambre de combustion (5),
dans lequel ladite au moins une arrivée de combustible (6) et ladite au moins une arrivée d'agent d'oxydation (7, 7') pour un agent d'oxydation primaire s'étendent parallèlement l'une à l'autre à travers l'ouvreau (4) et débouchent dans la chambre de combustion (5) à distance l'une de l'autre,
**caractérisé en ce qu'**il est prévu deux ou plusieurs arrivées d'agent d'oxydation (7, 7', 7") pour un agent d'oxydation primaire, qui sont disposées en deux groupes espacés l'un de l'autre, de telle manière que les ouvertures de sortie des groupes des arrivées d'agent d'oxydation (7, 7', 7") forment des rangées verticalement espacées l'une de l'autre, entre lesquelles débouche une rangée d'arrivées de combustible (6), et il est prévu à côté et/ou au-dessus des arrivées de combustible (6) et/ou des arrivées d'agent d'oxydation des conduites d'arrivée (15, 16, 17) pour un agent d'oxydation secondaire.

2. Four selon la revendication 1, **caractérisé en ce que** les ouvertures de sortie des arrivées de combustible (6) et des arrivées d'agent d'oxydation (7, 7', 7") sont disposées en rangées disposées parallèlement l'une à l'autre.

3. Four selon la revendication 2, **caractérisé en ce que** les ouvertures de sortie des rangées s'étendant en parallèle des arrivées de combustible (6) ou des arrivées d'agent d'oxydation (7, 7', 7") sont disposées en décalage l'une par rapport à l'autre.

4. Four selon l'une quelconque des revendications précédentes, **caractérisé en ce qu'**il est prévu respectivement une à dix arrivées de combustible (6) et une à dix arrivées d'agent d'oxydation (7, 7', 7").

5. Four selon l'une quelconque des revendications précédentes, **caractérisé en ce que** les arrivées de combustible (6) sont logées au moins en partie à l'intérieur des arrivées d'agent d'oxydation (7").

6. Four selon l'une quelconque des revendications précédentes, **caractérisé en ce que** les arrivées de combustible (6) et/ou les arrivées d'agent d'oxydation (7, 7', 7") et/ou les conduites d'arrivée (15, 16, 17) pour un agent d'oxydation secondaire sont équipées d'un dispositif de refroidissement.

7. Procédé de combustion d'un combustible avec un agent d'oxydation dans un four à sole ou un four à bassin, **caractérisé en ce que** l'on introduit un combustible par plusieurs arrivées de combustible (6) disposées parallèlement l'une à l'autre et un agent d'oxydation primaire par plusieurs arrivées d'agent d'oxydation (7, 7', 7") disposées parallèlement l'une à l'autre et aux arrivées de combustible (6) dans la cambre de combustion (5), avec formation de rapports d'écoulement pratiquement laminaires, de telle manière qu'après l'allumage il se produise une combustion sans flamme dans la chambre de combustion (5),
et on introduit un combustible et un agent d'oxydation primaire dans un rapport sous-stoechiométrique l'un par rapport à l'autre et on injecte par des canaux d'agent d'oxydation secondaire (15, 16, 17) espacés des arrivées d'agent d'oxydation primaire (7, 7', 7") ou des arrivées de combustible (6) un agent d'oxydation secondaire jusqu'à atteindre des rapports stoechiométriques, et on obtient ainsi une combustion étagée.

8. Procédé selon la revendication 7, **caractérisé en ce que** l'on fait varier la géométrie de la flamme et/ou la direction principale de la flamme en faisant varier les courants pulsés de l'agent d'oxydation secondaire fourni par les canaux d'agent d'oxydation secondaire (15, 16, 17) .

9. Procédé selon une des revendications 7 ou 8, **caractérisé en ce que** l'on utilise comme agent d'oxydation de l'oxygène présentant une pureté de plus de 95% en volume, de préférence de plus de 99 % en volume.
